# EUROPEAN PATENT APPLICATION

(11) **EP 3 957 508 A1**
(43) Date of publication of application: **23.02.2022**
(21) Application number: 20791925.9
(22) Date of filing: 16.04.2020
(51) Int. Cl.: B60K 17/34, B60K 23/08, B60B 35/12, F16H 29/12, F16H 29/18, B62D 61/12

(54) **DISENGAGEMENT SYSTEM FOR A VEHICLE WITH A FIRST SHAFT AND A SECOND SHAFT**

(30) Priority: 17.04.2019 BR 102019007822
(71) Applicant: IVECO S.P.A., 10156 Torino (IT)
(72) Inventor: PEREIRA LEMOS, José Francivaldo, 35700-187 Sete Lagoas (BR); NICORA, Fabio, 19015 Levanto (IT)
(74) Representative: Faraldi, Marco
(86) International application number: PCT/BR2020/050132
(87) International publication number: WO 2020/210888

(57) **Abstract**

The invention relates to a disengagement system (32) for a vehicle (10) with a first shaft (22) and a second shaft (24). The disengagement system (32) includes a housing (34), an input shaft (36), a pinion shaft (38) and a coupling device (40) for selectively coupling the input shaft (36) to the pinion shaft (38). The coupling device (40) includes a coupler (66) and an actuator (68) connected to the coupler (66). The actuator (68) is configured to slide the coupler (66), so that the coupler (66) couples to and transmits a driving force between the input shaft (36) and the pinion shaft (38) in an engaged position of the coupling device (40) and uncouples from the input shaft (36) and the pinion shaft (38) in a disengaged position of the coupling device (40).

## Description

### FIELD OF THE INVENTION

The present invention relates to work vehicles, and more specifically to a device that disengages the driving force from a shaft of a work vehicle.

### BACKGROUND OF THE INVENTION

A work vehicle, such as a large truck or tractor, generally includes a chassis, an engine to provide motive power, a transmission, and a drive train, which includes at least three shafts to increase the rolling and towing capacity of the work vehicle. For example, the work vehicle can include a front steering shaft and a pair of rear tandem shafts. The work vehicle can have multiple drive configurations, such as a 6x2, 6x4, 6x6, 8x4, 8x8, or 10x8, to selectively drive one or more rear shafts. For example, a work vehicle with a 6x4 drive configuration may include a front non-drive steer shaft and a pair of rear shafts, both driven by the engine. In some circumstances, for example when towing a heavy load uphill, it may be desirable to apply a driving force to all three shafts of the work vehicle in a 6x6 drive configuration to increase traction. In other circumstances, for example when operating the work vehicle without a trailer, it may be desirable to activate only one of the shafts in a 6x2 drive configuration to decrease traction and increase fuel efficiency.

On some work vehicles, one of the rear shafts can be disengaged from the driving force of the engine. For example, the work vehicle may include a decoupling element to selectively disengage the rearmost shaft so that the work vehicle can be operated in a 6x4 drive configuration with both rear shafts driven by the engine, or a 6x2 drive configuration with only the foremost rear shaft driven by the engine. Additionally, the rearmost disengaged shaft may be a lifting shaft that can be raised by a lifting element, e.g. an air bag, to raise the wheels of the lifting shaft, above the wheel. In this way, the operator can raise the lifting shaft when the work vehicle does not need additional load or towing capacity. The disengaged and/or raised shaft can thus increase fuel efficiency, decrease wear, and/or improve manoeuvrability.

A typical decoupling element can include clutches, for example, a toothed clutch and/or a selectively engageable shaft positioned between the rear tandem shafts. For example, a decoupling element can include multiple clutch plates and actuators controlled by an electronic control unit to disengage the shaft further back from the driving force. Additionally, for example, the decoupling element can be in the form of a two-piece drive shaft that includes a sliding sleeve to selectively couple each part of the shaft. However, such prior art decoupling elements can be complex and expensive.

What is needed in the technique is a low-cost system to disengage a pinion shaft.

### DESCRIPTION OF THE INVENTION

In one embodiment formed in accordance with the present invention, a shaft disengagement system is provided for a vehicle having a rear tandem shaft assembly. The disengagement position includes a housing, an input shaft, a pinion shaft, and a coupling device. The coupling device selectively couples the input and pinion shafts to selectively disengage the shaft further back from the traction force, thus positioning the working vehicle between a 6x4 and a 6x2 drive configuration.

In another embodiment formed in accordance with the present invention, a disengagement system is provided for a vehicle. The vehicle includes a first shaft and a second shaft. The disengagement system includes a housing, an input shaft configured to connect to the first shaft housed within the housing, a pinion shaft configured to operationally connect to the second shaft located inside the housing; the pinion shaft is coaxially aligned to the input shaft, and a coupling device selectively couples the input shaft to the pinion shaft. The coupling device includes a coupler and an actuator connected to the coupler. The actuator is configured to slide the coupler axially relative to the input shaft so that the coupler couples and transmits a driving force between the input shaft and pinion shaft when the coupling device is in an engaged position, and disengages the input shaft and pinion shaft when the coupling device is in a disengaged position.

One possible advantage of the embodiment of the shaft disengagement system is that the pneumatically actuated shift fork selectively disengages the traction force from the rear shaft, which thus increases the efficiency of the work vehicle.

### BRIEF DESCRIPTION OF THE DRAWINGS

For illustration purposes, certain operations of the present invention are shown in the figures. It should be understood, however, that the invention is not limited to the precise arrangements, dimensions, and instruments shown. Similar numbers indicate similar elements in the figures. In the pictures:
Figure 1 illustrates a side view of one embodiment of a work vehicle, the work vehicle comprising a rear tandem shaft assembly according to one embodiment of the present invention;
Figure 2 illustrates a top view of the rearmost shaft of the tandem shaft assembly in Figure 1, with this assembly also including a disengagement system;
Figure 3 illustrates a cross-sectional view of the disengagement system in Figure 2 in an engaged position; and
Figure 4 shows a cross-sectional view of the disengagement system in Figures 2 and 3 in a disengaged position.

### DESCRIPTION OF THE ACHIEVEMENTS OF THE INVENTION

The terms "forward," "backward," "left," and "right" when used in connection with the work vehicle and/or components thereof are normally determined with reference to the forward operating travel direction of the work vehicle, but are not to be construed as limiting. The terms "longitudinal" and "transverse" are determined with reference to the forward and backward direction of the working vehicle, but they should not be interpreted as limiting.

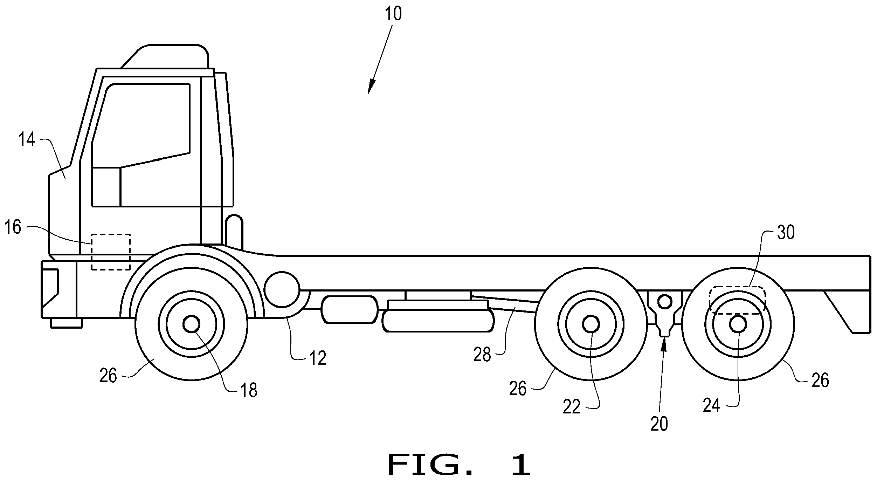

Now referring to the figures, more specifically to Figure 1, a work vehicle 10 is shown which generally includes a chassis 12, a cab 14 for an operator, a prime mover 16, for example a diesel engine 16, a front shaft 18, a tandem shaft assembly 20 with at least two shafts 22, 24, wheels 26 attached to the shafts 18, 22, 24, and a drive train including a transmission, which includes a gearbox (or gearboxes), and a main drive shaft 28 for transferring the driving force, i.e. a driving torque, from the engine 16 to the tandem shaft assembly 20 to provide primary traction to the work vehicle 10. The front wheels 26 of the front shaft 18 are typically configured to be steered to provide directional control to the work vehicle 10. The engine 16, via the drive train, can drive the wheels 26 of any shaft 18, 22, 24. The work vehicle 10 may include more than three shafts. The work vehicle 10 may have any desired drive configuration, such as a 6x6, 6x4, 6x2, 8x8, 8x4, 10x8 or 10x6. The work vehicle 10 can be in the form of any desired vehicle 10, such as a truck or a bus.

The tandem shaft assembly 20 may be liftable, such that one of the shafts 22, 24 is selectively foldable and can be lifted off the ground. In this way, the work vehicle 10 may be transformed from a 6x4 drive configuration to a 6x2 drive configuration by disengaging and/or lifting one of the rear shafts 22, 24. In this regard, the tandem shaft assembly 20 may additionally include a lifting element 30, for example an air bag 30, for lifting the rearmost shaft 24. However, the work vehicle 10 may not include a lifting element 30, and thus the tandem shaft assembly 20 may not be liftable. It is worth noting that one or both of the rear shafts 22, 24 may, however, be disengaged from the driving force of the engine 16, regardless of whether one of the rear shafts 22, 24 can be lifted. Therefore, the tandem shaft assembly 20 may improve fuel economy, reduce wear on the rearmost shaft 24 and/or shorten the wheelbase of the work vehicle 10 to improve manoeuvrability. It is conceivable that the tandem shaft assembly 20 could be configured to lift the frontmost rear shaft 22 instead of the rearmost shaft 24.

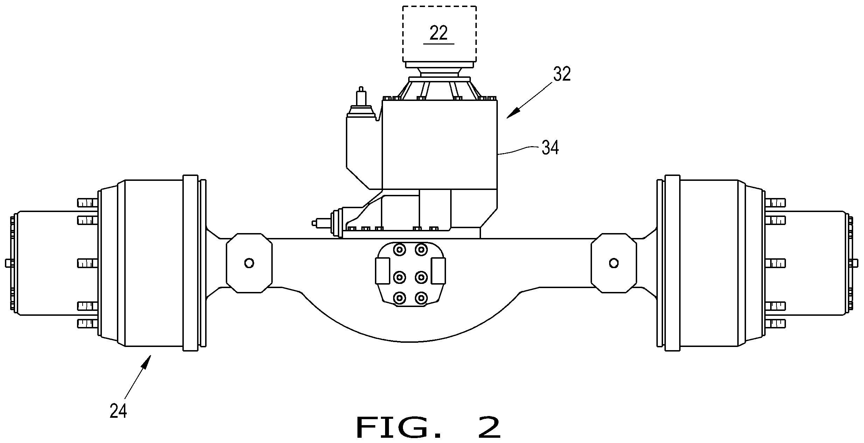

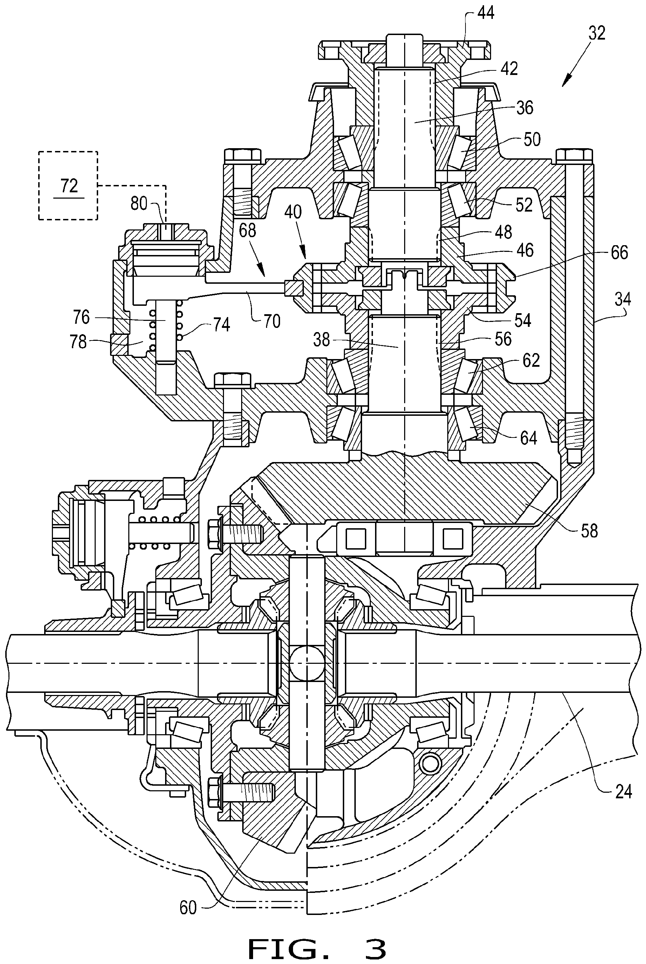

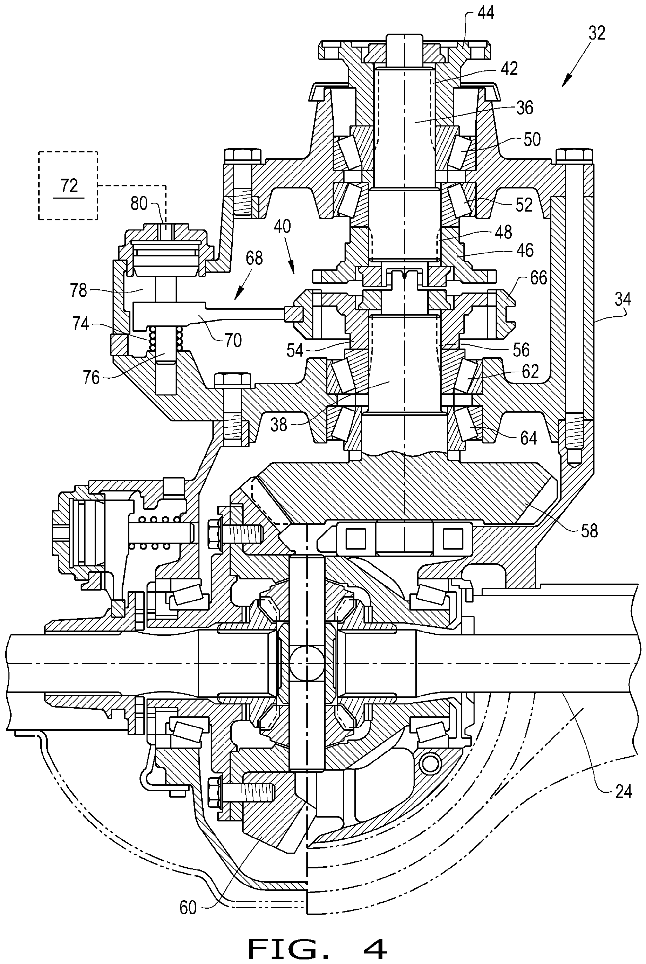

Now, referring collectively to Figures 2 to 4, the tandem shaft assembly 20 may additionally include a disengagement system 32 for selectively disengaging one of the rear shafts 22, 24 from the driving force, i.e., the drive torque of the engine 16. The disengagement system 32 is connected between the frontmost rear shaft 22 and the rearmost shaft 24. The disengagement system 32 may generally include a housing 34, an input shaft 36, a pinion shaft 38 and a coupling device 40 configured to disengage the rearmost shaft 24 to cease transmission of the driving force from the engine 16 (Figures 3 and 4). Thus, the coupling device 40 can couple the input shaft and pinion shafts 36, 38 in an engaged position to transmit motive power from the input shaft 36, through the pinion shaft 38, to the rearmost shaft 24 (Figure 3). Alternatively, the coupling device 40 can decouple the input shaft and pinion shafts 36, 38 in a disengaged position to cease transmitting driving force to the rearmost shaft 24 (Figure 4).

The input shaft 36 is configured to connect with the rear shaft 22 and pinion shaft 38. The input shaft 36 may be in the form of a prop shaft 36 that is integrated within the disengagement system 32, so that the prop shaft 36 connects to the rear shaft differential 22. Alternatively, the input shaft 36 may operationally couple to a booster shaft, which in turn couples to the rear shaft differential 22. As shown, the front end of the input shaft 36 has teeth 42 that engage with the flange 44, which in turn is coupled to the rear shaft differential 22. The rear end of the input shaft 36 may include a mounting element 46, such as a flange 46, which selectively engages with the coupling device 40. The mounting element 46 may be integrally formed with the input shaft 36, or the mounting element 46 may be a separate component that is affixed to the input shaft 36. The mounting element 46 may have an outer diameter and/or a splined inner diameter. As shown, the rear end of the input shaft 36 has teeth 48 that engage with the mounting element 46. The input shaft 36 is housed within the housing 34 via bearings 50, 52. The input shaft 36 may comprise any desired material, such as metal.

The pinion shaft 38 is configured to connect operationally to the rearmost shaft 24. Note that the pinion shaft 38 is not connected to the input shaft 36, except that it is connected to it operationally by means of the coupling device 40. The pinion shaft 38 is coaxially aligned to the input shaft 36. The front end of the pinion shaft 38 may include a mounting element 54, such as a flange 54, which selectively couples to the coupling device 40. The mounting element 54 may be integrally formed with the pinion shaft 38, or the mounting element 54 may be formed as a separate component that is affixed to the pinion shaft 38. The mounting element 54 may have an outside diameter and/or a splined inside diameter. As shown, the front end of the pinion shaft 38 has teeth 56 that engage the mounting element 54. The rear end of the pinion shaft 38 may be connected to a pinion gear 58, which, in turn, is configured to connect to the rear shaft 24, via a ring gear 60. The pinion shaft 38 can comprise any desired material, such as metal.

The coupling device 40 generally includes a coupler 66 and an actuator 68, which axially slides the coupler 66 relative to the input and pinion shafts 36, 38 so that the coupler 66 couples and transmits a driving force between the input shaft 36 and pinion shaft 38 in the engaged position (Figure 3), or disengages the input shaft 36 and pinion shaft 38 in the disengaged position (Figure 4).

The coupler 66 may selectively engage with each mounting element 46, 54 of the shafts 36, 38. The coupler 66 may be in the form of an annular sleeve 66. However, the coupler 66 may be in the form of any desired coupling element. The coupler 66 may have a splined inner diameter that engages with the splines of the mounting elements 46, 54. The coupler 66 may have a receiving portion, for example a notch (unnumbered), for engaging with the actuator 68.

The actuator 68 may include a shift fork 70, a fluid device 72, and/or a tilting element 74. The shift fork 70 can be slid back and forth on an actuator shaft 76 by means of a pressurized fluid from the fluid device 72 and/or by the tilting force of the tilting element 74, which acts on the shift fork 70 to thereby axially slide the coupler 66. For example, in the engaged position, the fluid device 72 may not transmit force on the shift fork 70 and the tilting element 74 may hold or return the shift fork 70 to its initial position, which in turn slides the coupler 66 axially forward to contact and engage both the input shaft 36 and pinion shaft 38 (Figure 3). In the disengaged position, the fluid device 72 applies pressure on the shift fork 70 to overcome the tilting force of the tilting element 74 and slide the shift fork 70, which then slides the coupler 66 axially backward so that the coupler 66 only contacts and engages with the pinion shaft 38. (Figure 4). Thus, in the disengaged position, the coupler 66 disengages the pinion shaft 38 so that no driving force from the engine 16 is transmitted from the input shaft 36 to the pinion shaft 38. It is worth noting that in the disengaged position, the actuator 68 may instead slide, axially, the coupler 66 over the input shaft 36, instead of the pinion shaft 38, to cease transmission of the driving force to the rearmost shaft 24. It is worth noting that the actuator 68 may be in the form of any desired actuator, such as a hydraulic or electric engine that is operationally connected to the coupler 66.

The shift fork 70 has one end that is slidably connected to the actuator shaft 76, and the other end that is fixed to the coupler 66. The actuator shaft 76 is parallel to the input shaft 36. The shift fork 70 has a front face and a rear face at its ends and its end is connected to the actuator shaft 76. As shown, the pressurized fluid acts on the front face and the tilting element 74 acts oppositely on the rear face, so that the shift fork 70 is moved by the fluid and the tilting element 74 in the opposite manner. The shift fork 70 may be in the form of any desired shift fork 70.

The fluid device 72 fluidly drives the shift fork 70 such that the shift fork 70 can be slid by the pressurized fluid. The coupling device 40 may additionally include a sealed internal space 78 or cavity 78 and at least one fluid inlet 80 for fluidly coupling the internal space 78 to the fluid device 72. Thus, the fluid can remain within the internal space 78. The internal space 78 is bounded by the housing 34, a connection between the actuator shaft 76 and the housing 34, a connection between the shift fork 70 and the housing 34, and a connection between the shift fork 70 and the actuator shaft 76. The fluid device 72 may be in the form of any desired fluid. As shown, the fluid is in the form of compressed air and the fluid device 72 is in the form of an air compressor 72. It is worth noting that the fluid may be in the form of any desired fluid, such as hydraulic fluid. It is conceivable that the shift fork 70 could only be moved by the fluid device 72 by applying or removing pressurized fluid on both faces of the shift fork 70. In this regard, the coupling device 40 may include at least two fluid inlets, positioned, respectively, on each face of the shift fork 70 (not shown).

The tilting element 74 is arranged around the actuator shaft 76 and connected between the housing 34 and the rear face of the shift fork 70. The tilting element 74 is configured to apply the tilting force on the rear end face of the shift fork 70. The tilting element 74 may be in the form of any tilting element, such as a serpentine spring 74.

These and other advantages of the present invention will be apparent to those skilled in the art from the preceding specification. Consequently, it will be noted by those skilled in the art that modifications can be made to the embodiments described above without departing from their broad inventive concept. It should be understood that this invention is not limited to the specific disclosures described herein, but is intended to include all changes and modifications which are included in the scope and spirit of the invention.

## Claims

1. A disengagement system (32) for a vehicle (10) with a first shaft (22) and a second shaft (24) comprising:
a housing (34);
an input shaft (36) configured to connect to the first shaft (22) and located within the housing (34);
a pinion shaft (38) configured to connect operationally to the second shaft (24) and located within the housing (34), wherein the pinion shaft (38) is generally aligned coaxially with the input shaft (36); and
(38),a coupling device (40) for selectively coupling the input shaft (36) to the pinion shaft
**characterised in that**:
the coupling device (40) comprises a coupler (66) and an actuator (68) connected to the coupler (66), wherein the actuator (68) is configured to slide the coupler (66) in a direction, generally axial, with respect to the input shaft (36), so that the coupler (66) couples and transmits a driving force between the input shaft (36) and pinion shaft (38) in an engaged position of the coupling device (40), and disengages the input shaft (36) and pinion shaft (38) in a disengaged position of the coupling device (40).

2. The disengagement system (32) according to claim 1, **characterised in that** it additionally comprises an actuator shaft (76) located within the housing (34), wherein the actuator shaft (76) is parallel to the input shaft (36), and wherein the actuator (68) comprises a shift fork (70) comprising a first end slidably connected to the actuator shaft (76) and a second end fixed to the coupler (66).

3. The disengagement system (32) according to claim 2, **characterised in that** the actuator (68) additionally comprises a fluid device (72) configured to fluidly actuate the shift fork (70) such that the shift fork (70) can slide by means of a fluid from the fluid device (72) acting on the shift fork (70).

4. The disengagement system (32) according to claim 3, **characterised in that** the fluid remains within a sealed internal space (78), and the internal space (78) is connected by means of a connection between the actuator shaft (76) and the housing (34), a connection between the shift fork (70) and the housing (34) and a connection between the shift fork (70) and the actuator shaft (76).

5. The disengagement system (32) according to claim 4, **characterised in that** the fluid device (72) is fluidly coupled to the internal space (78).

6. The disengagement system (32), according to any one of claims 3 to 5, **characterised in that** the fluid device (72) is an air compressor (72), and the fluid is pressurised air, so that the shift fork (70) is pneumatically actuated.

7. The disengagement system (32) according to any one of claims 3 to 6, **characterised in that** the actuator (68) additionally comprises a tilting element (74) arranged around the actuator shaft (76) and connected to the shift fork (70).

8. The disengagement system (32) according to claim 7, **characterised in that** the shift fork (70) has a front face and a rear face, and the fluid acts on the front face, and the tilting element (74) acts in the opposite way on the rear face, so that the shift fork (70) can be moved by the fluid and the tilting element (74) in an opposing manner.

9. The disengagement system (32) according to any one of the preceding claims, **characterised in that** the coupler (66) of the coupling device (40) comprises an annular sleeve (66).

10. The disengagement system (32) according to claim 9, **characterised in that**, in the engaged position, the actuator (68) axially slides the annular sleeve (66) to contact and engage with the input shaft (36) and the pinion shaft (38), and, in the disengaged position, the actuator (68) slides the annular sleeve (66) axially to only contact the pinion shaft (38), so that the driving force is not transmitted from the input shaft (36) to the pinion shaft (38).

11. The disengagement system (32) according to any one of the preceding claims, **characterised in that** it additionally comprises a pinion gear (58) connected to the pinion shaft (38) and configured to operationally connect operationally to the second shaft (24) of the vehicle (10).

12. The disengagement system (32) according to any one of the preceding claims, **characterised in that** the vehicle (10) is a work vehicle (10) comprising an engine (16) providing the driving force, a front shaft (18), and a rear tandem shaft assembly (20) comprising first and second shafts (22, 24), such that the first shaft (22) is a frontmost rear shaft (22) and the second shaft (24) is a rearmost shaft (24) of the tandem shaft assembly (20).

13. The disengagement system (32) according to claim 12, **characterised in that** the frontmost rear shaft (22) and the rearmost shaft (24) of the tandem shaft assembly (20) are selectively driven by the driving force of the engine (16), and, in the disengaging position of the coupling device (40), the actuator (68) disengages the coupler (66) to disengage the rearmost shaft (24) from the driving force of the engine (16).
